(19) **Europäisches Patentamt** / **European Patent Office** / **Office européen des brevets**

(11) **EP 3 352 091 A1**

(12) **EUROPEAN PATENT APPLICATION**

(43) Date of publication:
**25.07.2018 Bulletin 2018/30**

(51) Int Cl.:
**G06F 17/16** (2006.01)       **G06F 3/00** (2006.01)
**G06Q 10/06** (2012.01)

(21) Application number: **17163908.1**

(22) Date of filing: **30.03.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.01.2017 IN 201741002356**

(71) Applicant: **Wipro Limited**
**560 035 Karnataka (IN)**

(72) Inventors:
- **MANDAL, Swarup**
  **700075 West Bengal (IN)**
- **CHANDA, Debasish**
  **700140 West Bengal (IN)**
- **DUTTA, Souvik**
  **700094 West Bengal (IN)**

(74) Representative: **Finnegan Europe LLP**
**16 Old Bailey**
**London EC4M 7EG (GB)**

(54) **METHODS AND SYSTEMS FOR IMPROVING USER EXPERIENCE OF AN ELECTRONIC DEVICE**

(57)     This disclosure relates generally to data processing, and more particularly, to for improving user experience of an electronic device. In one embodiment, a hardware processor-implemented method for improving user experience design (UX) of an electronic device is provided. The method comprises retrieving, from a database, data representing a plurality of UX criteria and a plurality of alternative designs of the electronic device; generating, based on the retrieved data, a hierarchical search tree; receiving, in iterations, rankings among a subset of the plurality of UX criteria; determining aggregated UX criteria influence factor and aggregated alternative designs scores; configuring the search tree based on the aggregated UX criteria influence factors and aggregated alternative designs scores; determining, based on the search tree, an UX solution; and transmitting the determined UX solution to a product configuration system to enable the UX solution to be incorporated in the electronic device.

FIG. 1

**EP 3 352 091 A1**

**Description**

<u>Technical Field</u>

This disclosure relates generally to data processing, and more particularly, to methods and systems for improving user experience of an electronic device.

<u>Background</u>

User experience can be one of the critical real-life physical factors that a user feels while interacting with or using an electronic device in his/her daily life. Unlike other products (e.g., a piece of jewelry), interaction with an electronic device typically plays a major role in determining the user experience. Interaction can affect the user experience in many different ways. For example, the user interface of an electronic device may determine how intuitive it is to use the device for a specific function, to learn to use the device, etc. Moreover, other features of the electronic device may also affect serviceability (e.g., ease of maintenance and repair), as well as customization of the device (e.g., according to the user's preferences), etc. The effects imposed by these factors on the user experience can be different for different users, different products, different functionality goals, etc.

Conventionally methods provide tools for measuring a user's subjective feeling about the importance of a single factor to the user experience of an electronic device. For example, using a tool such as Feeling Thermometer, a user can provide a score that indicates his or her subjective feeling, in absolute terms, about the importance of a factor.

The inventors have recognized several technical problems with these conventional methods. First, conventional methods do not consider the conjugal influence of one factor over another, which can lead to overestimation (or underestimation) of the importance of those factors, and ignorance of the importance and utilities of these factors can be intertwined, and that these factors can be specific for the functionalities to be provided by the electronic device. As an illustrative example, an electronic device that provides interactive education tools for children may require an interface that can be operated easily by the children to provide education content with minimum training. However, other functionalities of the electronic device (e.g., parental control, downloading of software, etc.) need not be made accessible to the children. Without recognizing the intertwined nature of these factors, the design of the electronic device can be driven by a single factor, which can to lead poor user experience.

Second, conventional methods also do not consider other constraints, which can be either technical (e.g., required display screen size, required computer processor speed, etc.), or non-technical (e.g., cost, time to market, etc.).

Therefore, there is a need for a method and a system that facilitate the design of an electronic device by taking into account the conjugal influence of one factor that affects user experience over another factor, and the constraints, to improve the user experience of the electronic device.

**SUMMARY**

Embodiments of the present disclosure present technological improvements as solutions to the above-mentioned technical problems, among others. For example, in one embodiment, a hardware processor-implemented method for improving user experience design (UX) of an electronic device is provided. The method comprises: retrieving, from a database, data representing a plurality of UX criteria and a plurality of alternative designs of the electronic device; generating, based on the retrieved data, a hierarchical search tree comprising a root, a first set of nodes representing the plurality of UX criteria, a second set of nodes representing the plurality of alternative designs, and a plurality of search paths that link among the root and the first and second sets of nodes; displaying, on an electronic interface, the plurality of UX criteria; receiving, in iterations, rankings among a subset of the plurality of UX criteria, wherein one of the plurality of UX criteria associated with a lowest ranking is removed from the subset between the iterations; determining a first set of relative rankings for one the plurality of UX criteria with respect each of the subsets of the plurality of UX criteria based on the rankings; determining aggregated UX criteria influence factor based on the first set of relative rankings; receiving, via the electronic interface, a second set of relative rankings among one or more sets of the plurality of alternative designs of the electronic device; determining aggregated alternative designs scores based on the second set of relative rankings; associating the search paths between the root and the plurality of UX criteria with a first set of weights determined based on the aggregated UX criteria influence factors; associating the search paths between the plurality of UX criteria and the plurality of alternative designs of the electronic device with a second set of weights determined based on the aggregated alternative designs scores; determining, based on the search paths and the associated first and second set of weights, an UX solution; and transmitting the determined UX solution to a product configuration system to enable the UX solution to be incorporated in the electronic device.

In another embodiment, a system for improving UX of an electronic device is provided. The system comprises a memory that stores a set of instructions; and a hardware processor configured to execute the set of instructions for:

retrieving, from a database, data representing a plurality of UX criteria and a plurality of alternative designs of the electronic device; generating, based on the retrieved data, a hierarchical search tree comprising a root, a first set of nodes representing the plurality of UX criteria, a second set of nodes representing the plurality of alternative designs, and a plurality of search paths that link among the root and the first and second sets of nodes; displaying, on an electronic interface, the plurality of UX criteria; receiving, in iterations, rankings among a subset of the plurality of UX criteria, wherein one of the plurality of UX criteria associated with a lowest ranking is removed from the subset between the iterations; determining a first set of relative rankings for one the plurality of UX criteria with respect each of the subsets of the plurality of UX criteria based on the rankings; determining aggregated UX criteria influence factor based on the first set of relative rankings; receiving, via the electronic interface, a second set of relative rankings among one or more sets of the plurality of alternative designs of the electronic device; determining aggregated alternative designs scores based on the second set of relative rankings; associating the search paths between the root and the plurality of UX criteria with a first set of weights determined based on the aggregated UX criteria influence factors; associating the search paths between the plurality of UX criteria and the plurality of alternative designs of the electronic device with a second set of weights determined based on the aggregated alternative designs scores; determining, based on the search paths and the associated first and second set of weights, an UX solution; and transmitting the determined UX solution to a product configuration system to enable the UX solution to be incorporated in the electronic device.

In yet another embodiment, a non-transitory computer readable storage medium is provided. The non-transitory computer readable storage medium stores a set of instructions that, when executed by a computer processor, causes the computer processor to perform methods consistent with embodiments of the present disclosure.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles.

**FIG. 1** illustrates an exemplary system for improving user experience of an electronic device, according to some embodiments of the present disclosure.

**FIG. 2** illustrates an exemplary search tree to be generated and utilized by the exemplary system of **FIG. 1.**

**FIG. 3** illustrates exemplary components of the exemplary system of **FIG. 1.**

**FIGs. 4A-4C** illustrate exemplary user interfaces for collecting data to be processed by the exemplary system of **FIG. 1.**

**FIG. 5** illustrates an exemplary method for improving user experience of an electronic device, according to some embodiments of the present disclosure.

**FIG. 6** is a block diagram of an exemplary computer system for implementing embodiments consistent with the present disclosure.

## DETAILED DESCRIPTION

Exemplary embodiments are described with reference to the accompanying drawings. In the figures, the leftmost digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

With embodiments of the present disclosure, a system may retrieve, from a database, data representing a plurality of user experience criteria and a plurality of alternative designs of the electronic device. The system may also generate, based on the retrieved data, a hierarchical search tree. The system may receive, in iterations, rankings among a subset of the plurality of user experience criteria. The system may also receive rankings among the plurality of alternative designs. The system may determine aggregated user experience criteria influence factor and aggregated alternative designs scores, and configure the search tree based on the aggregated user experience criteria influence factors and aggregated alternative designs scores. The system may also determine, based on the search tree, as well as one or more context constraints, a user experience solution, and transmit the determined user experience solution to a product configuration system to enable the user experience solution to be incorporated in the electronic device.

Embodiments of the present disclosure may facilitate the design of an electronic device by providing a UX solution determined based on the conjugal influence of one factor that affects user experience over another factor, and the constraints. As a result, the electronic device can be designed to provide improved user experience.

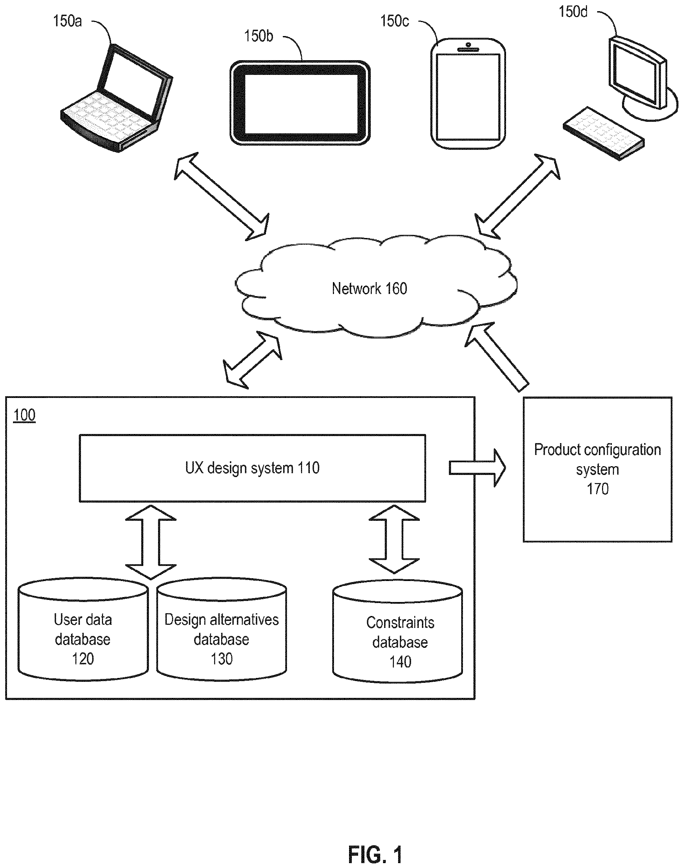

**FIG. 1** illustrates an exemplary system 100 for facilitating user experience design of an electronic device, according to some embodiments of the present disclosure. As shown in **FIG. 1,** system 100 includes a user experience (UX) design system 110, a user data database 120, a design alternatives database 130, and a constraints database 140.

In some embodiments, UX design system 110 can collect, over an interactive interface provided in user devices 150a-150d, user data related to user experience design. UX design system 110 can collect the data from user devices 150a-150d over network 160. The user data may include, for example, user feedback on relative importance among a set of design criteria, as well as rankings among a set of design alternatives.

The design criteria can reflect a set of metrics that can influence the user experience provided by an electronic device. There can be a predetermined number of design criteria specific for a particular design goal. The design goal may include, for example, a specification for certain functionalities to be provided by the electronic device. Moreover, each design criterion may include one or more design sub-criteria. An illustrative example of design criteria and sub-criteria is provided below.

Table 1

| Design Criteria | Usability | Learnability | Personalization | Service |
|---|---|---|---|---|
| Design sub-criteria | Accessibility | None | Contextual Service | Maintainability |
| | Input Method | | Customization | Troubleshoot |
| | Performance | | | |

In the illustrative example of Table 1, there can be four design criteria: usability, learnability, personalization, and service. The usability design criterion can refer to a metric related to, for example, ease of use of an interface provided by the electronic device. The learnability criterion can refer to a metric related to, for example, ease of learning to operate the electronic device. The personalization design criterion can refer to a metric related to, for example, personalization capability provided by the electronic device. The service criterion can refer to a metric related to, for example, how easily the electronic device can be repaired, diagnosed, and/or maintained.

Each of these criteria may exert a certain degree of influence on a specific design goal. For example, an electronic device designed to provide interactive mathematics session to children may require high degree of usability and learnability, to enable the children to easily take part in the mathematics session without much training. Such an electronic device may also need to provide capabilities to be personalized, to enable the mathematics session to be customized according to, for example, the mathematics skills level of a child who operates the device. However, there is probably little need for such an electronic device to be easily maintained (e.g., to troubleshoot the device, to change the hardware setting of the device, etc.), if the targeted children users are not expected to perform maintenance works on the device.

Some of the aforementioned design criteria may include a set of sub-criteria which can also exert varying degrees of influences on the design criteria. For example, as shown in Table 1, the usability criterion can include a set of sub-criteria including accessibility, input method, and performance. Accessibility can measure, for example, how easily a user can access various functionalities provided by the electronic device. Input method can reflect, for example, how easily a user can input data to the electronic device. Performance can also reflect, for example, the responsiveness of the interface in processing the user's input data. Moreover, the personalization design criterion may include a set of sub-criteria including contextual service, customization, and guidance. Contextual service can reflect, for example, the capabilities of an electronic device to provide relevant services to a user based on certain information, such as the user's location, personal attributes, etc. Customization can also reflect, for example, capabilities of an electronic device to be configured based on a user's personal preference. On the other hand, some design criteria, such as the learnability criterion, have no sub-criteria.

The user feedback data for these design criteria can include, for example, users' opinions about relative importance among the aforementioned design criteria, and relative importance among the aforementioned design sub-criteria. As to be described in more details below, UX design system 110 can receive, through a first web service interface that provides iterative interactions provided on user devices 150a and 150b, users' opinions on the relative importance among a set of design criteria and/or among a set of design sub-criteria. UX design system 110 may obtain the opinions from other sources as well, such as web articles, online polls, etc.

Moreover, the user data may also include rankings among a set of design alternatives provided by the users. As to be described in more details below, UX design system 110 can prompt, through a second web service interface, a user to rank a set of design alternatives based on perceived user experience. In some embodiments, UX design system 110 may provide a first group of users the first web service interface to collect opinions about the relative importance among the set of design criteria and/or sub-criteria, and provide a second group of users the second web service interface to collect ranking opinions about the design alternatives. The first group of users can be, for example, a set of potential users of an electronic device, while the second group of users can be, for example, a set of experts in user experience design. As to be discussed in more details below, the two sets of user data can be combined to provide an objective measurement of user experience provided by an electronic device incorporating a particular design. UX design system 110 can then store the collected user data into user data database 120 for later retrieval.

In some embodiments, design alternatives database 130 store data related to a set of design alternatives which can be incorporated into an electronic device. The design alternatives can be related to, for example, the design of a software interface, the design of a hardware interface, the packaging, etc. The data related to the design alternatives can come in different forms. For example, data related to a software interface may include, for example, a set of software codes and targeted software and hardware platforms (e.g., whether the software interface is for an iPhone, for an Android Phone, a Windows PC, etc.). Also, data related to a hardware interface and packing may include a set of computer-assisted-design (CAD) files, such as schematic files, bill of material files, etc. that can be provided to a tooling machine to generate prototypes.

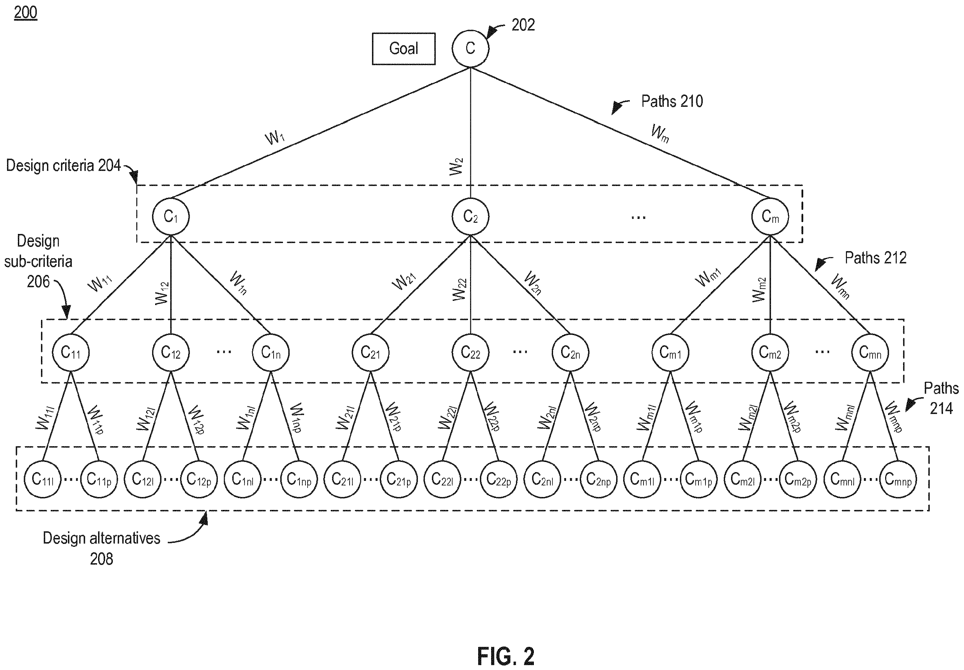

In some embodiments, design alternative database 130 may maintain a data structure that associates the aforementioned design alternatives data with the aforementioned design criteria and sub-criteria. The data structure can be in the form of a search tree structure. Reference is now made to **FIG. 2,** which illustrates an exemplary search tree 200 according to embodiments of the present disclosure. As shown in **FIG. 2,** search tree 200 includes a root node 202, a set of first-level child nodes 204, a set of second-level child nodes 206, and a set of third-level child nodes 208. Root node 202 can be connected to the set of first level child nodes 204 via a set of paths 210. First-level child nodes 204 can be connected to second-level child nodes 206 via a set of paths 212. Also, second-level child nodes 206 can be connected to third-level child nodes 208 via a set of paths 214.

Root node 202 can be associated with a predetermined design goal (e.g., to provide certain functionalities). The set of first-level child nodes 204 may be associated with the design criteria listed in Table 1 which can exert varying degrees of influences on the predetermined design goal. For example, node $C_1$ may be associated with the usability design criterion, node $C_2$ may be associated with the personalization criterion, etc. The set of second-level child nodes 206 may be associated with the design sub-criteria listed in Table 1, and can be linked to the first-level child nodes 204 to reflect the hierarchical relationship between the design criteria and design sub-criteria illustrated in Table 1. For example, node $C_{11}$ may be associated with the accessibility design sub-criterion, node $C_{12}$ may be associated with the input method design sub-criterion, etc.

Moreover, the set of third-level child nodes 208 may be associated with the design alternatives, and each of the third-level child nodes 208 may be linked to a second-level child node 206 associated with a design sub-criterion (or a duplicate of design criterion if the design criterion does not have any sub-criterion). With such an arrangement, each design alternative can be associated, via paths 210-214, with a design goal, a design criterion, and optionally a design sub-criterion. As shown in **FIG. 2,** multiple design alternatives can also be associated with the same set of design goal and design criterion and/or sub-criterion. Moreover, design alternatives database 130 may also store data representing multiple search trees 200. The data can be organized based on design goals, and multiple search trees 200 associated with different design goals can be generated.

The association between the design alternatives and the design goals and design criterion can be pre-determined based on the features of the design attributes. As an illustrative example, assuming that the design goal is to provide an interactive mathematics education session with lots of graphical representations, design features including a touch-screen to display the graphics and allow easy access to other features of the session can be associated with node $C_{11}$ (accessibility). As another illustrative example, assuming that the design goal is to provide digital personal assistance, design features including voice-commands can be associated node $C_{12}$ (input methods).

Moreover, each of the paths 210-214 can be associated with a weight. For example, as shown in **FIG. 2,** each of paths 210 is associated with a weight $W_m$, each of paths 212 is associated with a weight $W_{mn}$, and each of paths 214 is associated with a weight $W_{mnp}$. As to be discussed more in details below, the weights can be determined based on a combination of the feedback data for the design criteria and rankings among a set of design alternatives provided by the users, stored in design alternatives database. The weights allow UX design system 110 to select, for a predetermined goal, a set of design criteria and sub-criteria, and a design alternative associated with the design criteria and sub-criteria. The selections can be based on the weights and can reflect, for example, that the selected design criteria/sub-criteria exert the largest influence on the design goal, and that the selected design alternative is mostly likely to provide the selected design criteria/sub-criteria.

Referring back to **FIG. 1**, system 100 further comprises a constraints database 140. Constraints database 140 may store additional rules and constraints that UX design system 110 needs to account for when selecting the design alternatives. For example, constraints database 140 may store information related to technical constraints (e.g., required display screen size, required computer processor speed, etc.) and non-technical constraints (e.g., cost, time to market, etc.). After selecting a design alterative from search tree 200, UX design system 110 may verify that the selected design alternative satisfies the constraints. As an illustrative example, in a case where a certain software interface is selected, UX design system 110 may determine, based on the information stored in constraints database 140, whether the targeted electronic device to be installed with the selected software interface has sufficient computing power and the requisite screen size to provide the software interface. If UX design system 110 determines that the targeted electronic device does not satisfy the constraints, UX design system 110 may determine to select another software interface based on search tree 200 that satisfies the constraints.

After selecting a design alternative, UX design system 110 can also transmit information related to the selected alternative design information to a product configuration system 170, which can incorporate the alternative design information in an electronic device. The alternative design information can take in various forms. As an illustrative example, the alternative design may include a software interface, and UX design system 110 may transmit, as a part of the alternative design information, software codes associated with the software interface to product configuration system 170. Product configuration system 170 can then download the software codes to an electronic device (e.g., a smart phone, a tablet, a computer, etc.) to enable the electronic device to provide the selected software interface. As another example, the alternative design can be in the form of configuration settings for the electronic device, and product configuration system 170 can configure the electronic device based on the selected configuration settings provided by UX design system 110. As yet another example, the alternative design can also be in the form of device package design. Product configuration system 170 can generate data for a graphical representation of an electronic device by incorporating features of the alternative design, and transmit the data to user devices 150a-d to provide the graphical representation. Product configuration system 170 can also be linked to other tooling and prototyping machines to provide instructions to manufacture the device package.

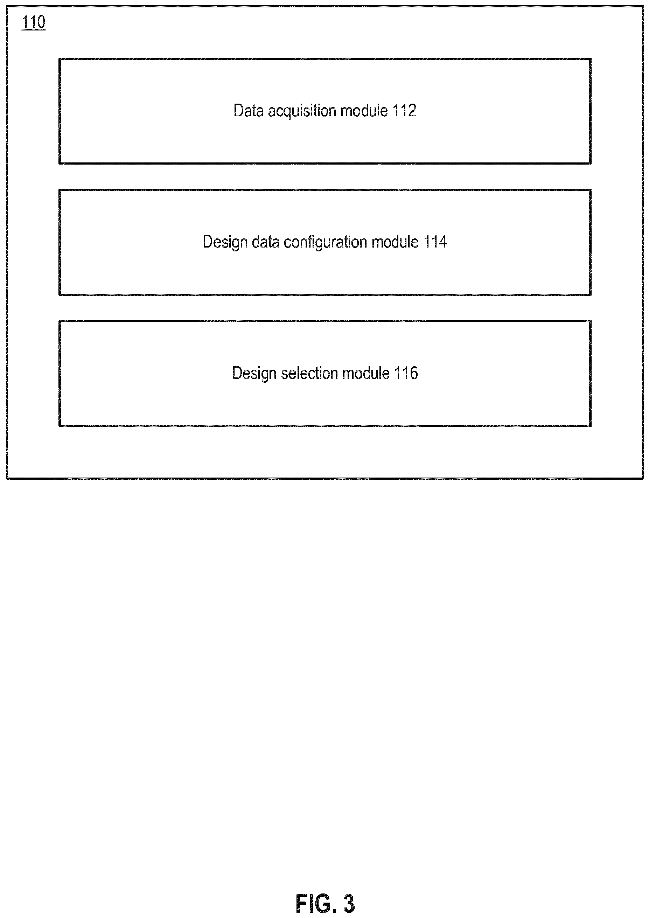

Reference is now made to **FIG. 3**, which illustrates exemplary components of UX design system 110 according to some embodiments of the present disclosure. As shown in **FIG. 3**, UX design system 110 may include a data acquisition module 112, a design data configuration module 114, and a design selection module 116.

For the purposes of this disclosure, "modules" may be implemented in software, hardware, firmware, a mix of any of those, or the like. For example, if the disclosed "modules" are implemented in software, they may be stored in a memory associated with system 100. Processors, I/O devices, and memory devices may be used to perform processes to implement and facilitate operations of the modules. Thus, the modules may include code instructions executable by one or more processors, alone or in various combinations with other modules disclosed in this or other embodiments. If the disclosed "modules" are implemented in hardware, they may comprise an embedded system or other dedicated hardware configured by machine code, assembly code, or the like to interact with other modules to perform functions consistent with disclosed embodiments. In the illustrative examples provided in this disclosure, UX design system 110 can be a part of an enterprise application operating on a server, and can include a number of software modules.

In some embodiments, data acquisition module 112 may interface with user devices 150a-d, as well as user data database 120, design alternatives database 130, and constraints database 140 of **FIG. 1.** Data acquisition module 112 may also include one or more software applications that operate to provide a web service interface, via user devices 150a-d, to receive data representing opinions about the relative importance among the set of design criteria and/or sub-criteria and ranking opinions about the design alternatives.

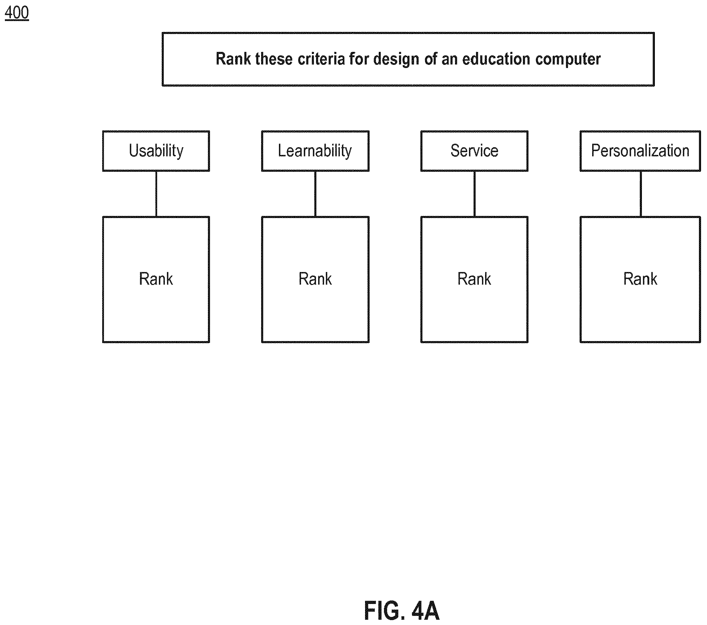

Reference is now to **FIG. 4A,** which illustrates an exemplary web service interface 400 according to embodiments of the present disclosure. Web service interface 400 can be provided by data acquisition module 112 of **FIG. 3** to receive data representing opinions about the relative importance among the set of design criteria. As shown in **FIG. 4A,** interface 400 may display a design goal, as well as a set of design criteria to a user, and then prompt the user to put in a score that reflects the user's evaluation of the influence of each criterion on user experience in presence of combination of the rest of the criteria, for that particular design goal. In some embodiments, the user can be provided score options of, e.g., 1, 3, 5, 7, and 9, each representing a degree of influence as follows:

Table 2

| Score | Degree of influence |
|-------|---------------------|
| 1 | No influence |
| 3 | No significant influence |
| 5 | Average influence |
| 7 | High influence |
| 9 | Very high influence |

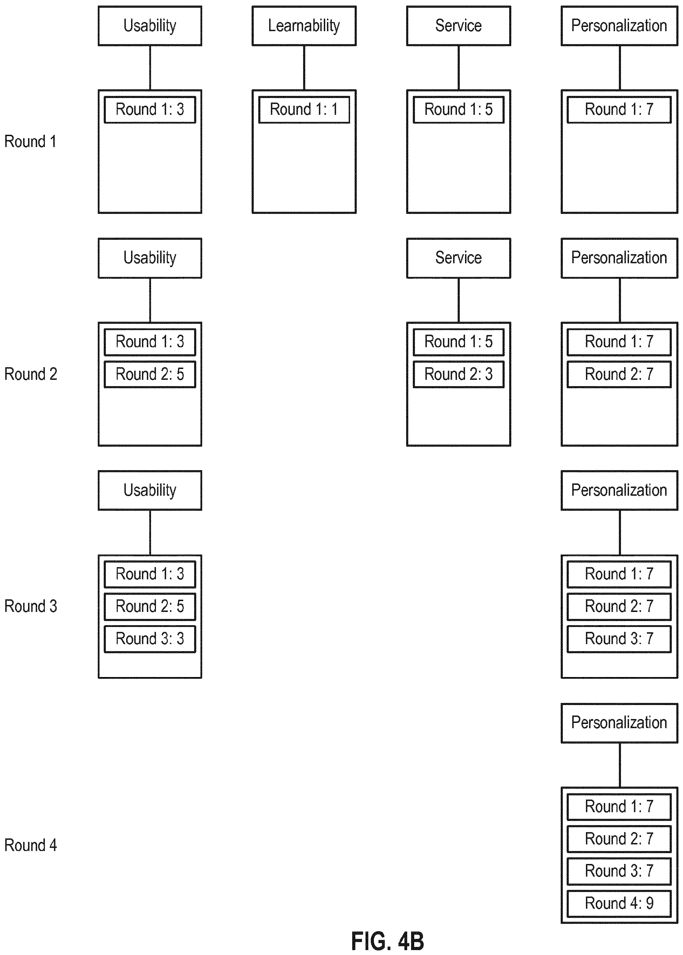

Data acquisition module 112 may provide, in iterative fashion, subsets of the design criteria to the user, and prompt the user to provide the scores for each design criterion in the subset. For example, referring to **FIG. 4B,** after each iteration (round), data acquisition module 112 may remove the design criterion associated with the lowest score (or based on user's selection if there is a tie), and prompt the user to provide the scores again. The iterations may stop when there is only design criterion left. Data acquisition module 112 may also display, in similarly iterative fashion, a set of design sub-criteria, and prompt the user to input scores for each design sub-criterion, in web service interface 400. With such arrangements, data acquisition module 112 can acquire a set of scores that represent the perceived conjugal influence of one design criterion (or sub-criterion) over other design criteria (or sub-criteria) that are present. Data acquisition module 112 may receive the scores from a group of users, and store the scores in user data database 120.

Referring back to **FIG. 3,** design data configuration module 114 can transform, via a series of operations, the scores into a set of criteria influence vectors, which can then be used to determine the weights associated with paths 210-214.

First, based on order of removal of criterion in web service interface 400 by a particular user, design data configuration module 114 can generate a criteria removal order vector R1, based on the following exemplary expression:

$$R1 = \begin{bmatrix} r_{11} \\ \vdots \\ r_{1n} \end{bmatrix} \qquad \text{(Expression 1)}$$

Here, $r_{1i}$ may indicate the removal order of the criterion $C_i$. Referring back to the illustrative example shown in **FIG. 4B,** the values of the vector R1 may be as follows:

Table 3

|  | R1 |
| --- | --- |
| Learnability ($C_1$) | 1 |
| Service ($C_2$) | 2 |
| Usability ($C_3$) | 3 |
| Personalization ($C_4$) | 4 |

Next, based on the scores, design data configuration module 114 can determine an ordered criteria set ($C^/$) according to the following exemplary expression:

$$C^/ = \left\{ C_1^/, \cdots, C_n^/ \right\} \qquad \text{(Expression 2)}$$

Here, $C_i^/$ may indicate the criterion removal at the i$^{th}$ iteration, by a particular user, according to the following exemplary expression:

$$C_i^/ = C_{r_i} \qquad \text{(Expression 3)}$$

Moreover, design data configuration module 114 can also determine a set of parameters $c_{ij}$, which can indicate the influence of overall UX in 9-point scale upon removal of criteria $C_i^/$ on $C_j^/$ in the presence of combination of criteria $\left\{ C_p^/, \cdots, C_n^/ \right\}$ where p = i +1. Design data configuration module 114 can then generate a set of criteria importance sets, which can be in the form tuples $\left\{ C_i^/, C_j^/, c_{ij} \right\}$.

After determining the tuples, design data configuration module 114 can determine an ordered criteria composition (OCM) matrix, for a particular user, based on the $c_{ij}$ values. The OCM matrix can be a reciprocal matrix, and can be defined according to the following exemplary expressions

$$OCM = \begin{bmatrix} ocm_{11} & \cdots & ocm_{1n} \\ \vdots & \ddots & \vdots \\ ocm_{n1} & \cdots & ocm_{nn} \end{bmatrix}$$

where $ocm_{ij} = c_{ij} \; for \; j > i,$

$$= \frac{1}{c_{ij}} \; for \; j < i,$$

$$= 1 \; for \; j == i \quad \text{(Expressions 4)}$$

Referring back to the illustrative example shown in **FIG. 4B,** the values of the OCM matrix can be as follows:

Table 4

|  | Learnability | Service | Usability | Personalization |
|---|---|---|---|---|
| Learnability | 1 | 5 | 3 | 7 |
| Service | $\dfrac{1}{5}$ | 1 | 3 | 7 |
| Usability | $\dfrac{1}{3}$ | $\dfrac{1}{3}$ | 1 | 9 |
| Personalization | $\dfrac{1}{7}$ | $\dfrac{1}{7}$ | $\dfrac{1}{9}$ | 1 |

Referring to Table 4, the first row can reflect the scores collected for the service, usability, and personalization design criteria in round 2, where the learnability design criterion is removed. Also, the second row can reflect the scores collected for the usability and personalization design criteria in round 3, where the service design criterion is removed. The third row can reflect the score collected for the personalization criterion in around 4.

Next, design data configuration module 114 can determine a criteria comparison (CM) matrix, for a particular user, based on the aforementioned ordered criteria composition matrix and criteria removal order vectors, according to following exemplary expression:

$$CM = \begin{bmatrix} cm_{11} & \cdots & cm_{1n} \\ \vdots & \ddots & \vdots \\ cm_{n1} & \cdots & cm_{nn} \end{bmatrix} \quad \text{(Expression 5)}$$

Here, each matrix entry corresponds to $cm_{r_i r_j}$, where the indices ($r_i$, $r_j$) corresponds to an entry in the criteria removal order vector. The value of each matrix entry $cm_{r_i r_j}$ can be set to be equal to an entry in the ordered criteria composition matrix, according to the following exemplary expression:

$$cm_{r_i r_j} = ocm_{ij} \quad \text{(Expression 6)}$$

After determining the criteria comparison matrix, design data configuration module 114 can determine an Eigen vector matrix ($W_C$) and an Eigen value matrix ($\lambda_C$) for the criteria comparison matrix. The Eigen vector matrix $W_C$ and the Eigen value matrix $\lambda_C$ may be represented according to the following exemplary expressions:

$$W_C = \begin{bmatrix} w_{11} & \cdots & w_{1n} \\ \vdots & \ddots & \vdots \\ w_{n1} & \cdots & w_{nn} \end{bmatrix} \quad \text{(Expression 7)}$$

$$\lambda_C = \begin{bmatrix} \lambda_{11} & \cdots & \lambda_{1n} \\ \vdots & \ddots & \vdots \\ \lambda_{n1} & \cdots & \lambda_{nn} \end{bmatrix} \qquad \text{(Expression 8)}$$

Design data configuration module 114 can further determine a principle Eigen vector matrix $\left(W_C^{/}\right)$ based on the Eigen vector matrix $W_C$ and the Eigen value matrix $\lambda_C$. The principle Eigen vector matrix can include a set of values, with each value representing the relative influence of a design criterion. The principle Eigen vector matrix can be determined according to the following exemplary expression:

$$W_C^{/} = \begin{bmatrix} w_{C1}^{/} \\ \vdots \\ w_{Cn}^{/} \end{bmatrix} \text{ where } w_{Cj}^{/} = w_{ik} \text{ so that } \lambda_{kk} = \max[\lambda_{ii}] \text{ for } i = 1 \text{ to } n$$

$$\text{(Expression 9)}$$

For example, design data configuration module 114 may determine, from the Eigen value matrix $\lambda$, a set of entries along the diagonal which corresponds to $\lambda_{ii}$, and determine the row index (k) for the entry with the maximum value. Design data configuration module 114 can then extract a row from the Eigen vector matrix W that corresponds to the determined row index (k), to generate the Principle Eigen Vector matrix.

Design data configuration module 114 may further determine a relative criteria influence vector (IV), for a particular user, by normalizing the principle Eigen vector matrix according to the following exemplary expression:

$$IV = \begin{bmatrix} iv_1 \\ \vdots \\ iv_n \end{bmatrix} \text{ where } iv_i = 1 - \frac{w_{Ci}^{/}}{\sum_{i=1}^{n} w_{Ci}^{/}} \text{ and } \sum_{i=1}^{n} iv_i = 1 \qquad \text{(Expression 10)}$$

As discussed above, data acquisition module 112 may acquire feedback data from a group of users. Design data configuration module 114 may determine, based on the aforementioned expressions, the relative criteria influence vector for each user, and then concatenate (e.g., using column concatenation) the relative criteria influence vector for each user to form a criteria rating matrix (CRM) that represent the rating for the criteria from the users. The criteria rating matrix can be represented according to the following exemplary expression:

$$CRM = \begin{bmatrix} crm_{11} & \cdots & crm_{1m} \\ \vdots & \ddots & \vdots \\ crm_{n1} & \cdots & crm_{nm} \end{bmatrix} \qquad \text{(Expression 11)}$$

Here, $crm_{ij}$ can represent the criteria rating for $i^{th}$ criterion, from a $j^{th}$ user.

Design data configuration module 114 may further determine an aggregated criteria rating (ACR) vector, wherein each element of the vector may represent an aggregated criteria rating of a criterion, from criteria rating matrix. The aggregated criteria rating vector can be determined according to the following exemplary expression:

$$ACR = \begin{bmatrix} acr_1 \\ \vdots \\ acr_n \end{bmatrix} \text{ where } acr_i = \sqrt[m]{\prod_{j=1}^{m} crm_{ij}} \qquad \text{(Expression 12)}$$

Here, each entry $acr_i$ can be determined based on a geometric mean of the entries of the i-$^{th}$ row of the criteria rating matrix.

Design data configuration module 114 may further generate a normalized aggregated criteria rating vector ($ACR^{/}$) according to the following exemplary expression:

$$ACR^{/} = \begin{bmatrix} acr_1^{/} \\ \vdots \\ acr_n^{/} \end{bmatrix} \text{ where } acr_i^{/} = \frac{acr_i}{\sum_{i=1}^{n} acr_i} \qquad \text{(Expression 13)}$$

Moreover, design data configuration module 114 may also generate a normalized aggregated sub-criteria rating vector ($ASCR^{/}$) based on the user feedback data for the sub-critiera according to the aforementioned expressions.

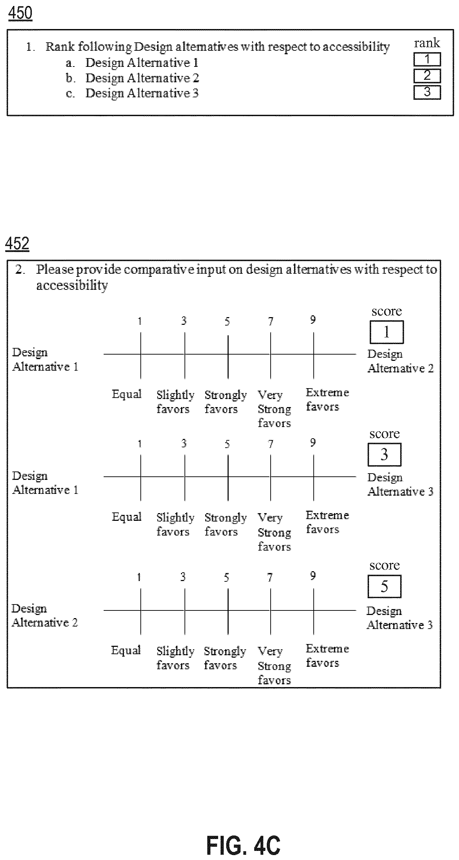

Besides user feedback data, data acquisition module 112 may also collect data related to ranking opinions about the design alternatives from a different set of users (e.g., user experience experts), and provide the collected data to design data configuration 114 for processing. Reference is now made to **FIG. 4C,** which illustrates an exemplary interface 450 and 452 according to embodiments of the present disclosure. Web service interfaces 450 and 452 can also be provided by data acquisition module 112 of **FIG. 3** to receive data representing ranking opinions about the design alternatives. As shown in **FIG. 4C,** interface 450 may display a set of questions. The first question may prompt the user to rank a set of design alternatives associated with a particular sub-criterion (e.g., accessibility). The associations can be determined based on search tree 200 of **FIG. 2.**

Based on the ranking, design data configuration module 114 may determine, for each user and for each sub-criterion, a preference order vector R2 according to the following exemplary expression:

$$R2 = \begin{bmatrix} r_{21} \\ \vdots \\ r_{2n} \end{bmatrix} \qquad \text{(Expression 14)}$$

Here, $r_{2k}$ may indicate the preference order of a particular design alternative $C_{ijk}$. For example, referring back to **FIG. 2,** the design sub-criterion $C_{11}$ may be associated with a set of design alternatives $C_{111}$, $C_{112}$, $C_{113}$, etc. In a case where "design alternative 1," "design alternative 2," and "design alternative 3" of **FIG. 4C** correspond to, respectively, design alternatives $C_{111}$, $C_{112}$, $C_{113}$, the preference order vector R2 can be as follows:

Table 5

| Design alternatives | R2 |
|:---:|:---:|
| $C_{111}$ | 1 |
| $C_{112}$ | 2 |
| $C_{113}$ | 3 |

Design data configuration module 114 may further determine a ranked alternative set ($A^{/}$) according to the following exemplary expression:

$$A^{/} = \left\{ C_{ij1}^{/}, \cdots, C_{ijn}^{/} \right\} \text{ where } C_{ijk}^{/} = C_{ijr_i} \qquad \text{(Expression 15)}$$

In this illustrative example, $A^{/}$ may comprise the set of $\{C_{111}, C_{112}, C_{113}\}$.

Based on the ranked alternative set, design data configuration module 114 may determine a design alternative comparison set (AA), which can include a set of pairs of design alternatives, according to the following exemplary expression:

$$AA = \left\{ C_{ijk}^{/}, C_{ijk/}^{/} \right\} \text{ where } k \geq k^{/} \qquad \text{(Expression 16)}$$

Referring to the example above, design data configuration module 114 may determine a design alternative comparison set comprising the following pairs: {$C_{111}$, $C_{112}$}, {$C_{111}$, $C_{113}$}, and {$C_{112}$, $C_{113}$}.

Design data configuration module 114 can then transmit data representing the design alternative comparison set back to data acquisition module 112, which can then display a second set of questions to the user in interface 452. In interface 452, data acquisition module 112 may prompt the user to provide a comparison input, in a 9-point scale, between each pair of design alternatives in the design alternative comparison set. Based on the comparison inputs, design data configuration module 114 can form a set of design alternatives comparison input set (AI), which can be a set of tuples, as $\left\{ C_{ijk}^{/}, C_{ijk/}^{/}, a_{kk/} \right\}$. Using the illustrative example of **FIG. 4C,** the tuples can become: {$C_{111}$, $C_{112}$, 1}, {$C_{111}$, $C_{113}$, 3}, and {$C_{112}$, $C_{113}$, 5}.

After determining the tuples, design data configuration module 114 can determine an ordered design alternatives comparison (ODAM) matrix, for a particular user, based on the $a_{kk/}$ values. The ODAM matrix can be a reciprocal matrix, and can be defined according to the following exemplary expressions:

$$ODAM = \begin{bmatrix} odam_{11} & \cdots & odam_{1n} \\ \vdots & \ddots & \vdots \\ odam_{n1} & \cdots & odam_{nn} \end{bmatrix}$$

$$\text{where } odam_{ij} = a_{ij} \; for \; j > i,$$

$$= \frac{1}{a_{ij}} \; for \; j < i,$$

$$= 1 \, for \, j == i \quad \text{(Expressions 17)}$$

Referring back to the illustrative example shown in **FIG. 4C,** the values of the ODAM matrix can be as follows:

Table 6

|  | Design alternative 1 | Design alternative 2 | Design alternative 3 |
|---|---|---|---|
| Design alternative 1 | 1 | 1 | 3 |
| Design alternative 2 | $\frac{1}{3}$ | 1 | 5 |
| Design alternative 3 | $\frac{1}{5}$ | 1 | 1 |

Next, design data configuration module 114 can determine a design alternative comparison (DAM) matrix, for a particular user, based on the aforementioned ordered design alternative composition matrix and preference order vectors, according to following exemplary expression:

$$DAM = \begin{bmatrix} dam_{11} & \cdots & dam_{1n} \\ \vdots & \ddots & \vdots \\ dam_{n1} & \cdots & dam_{nn} \end{bmatrix} \qquad \text{(Expression 18)}$$

Here, each matrix entry in the DAM matrix corresponds to $dam_{r_i r_j}$, where the indices ($r_i$, $r_j$) corresponds to an entry in the preference order vector. The value of each matrix entry $dam_{r_i r_j}$ can be set to be equal to an entry in the ordered design alternatives comparison matrix, according to the following exemplary expression:

$$dam_{r_i r_j} = odam_{ij} \qquad \text{(Expression 19)}$$

After determining the design alternatives comparison matrix, design data configuration module 114 can also determine an Eigen vector matrix ($W_{DA}$) and an Eigen value matrix ($\lambda_{DA}$) for the design alternatives comparison matrix, based on Expressions 7 and 8. Design data configuration module 114 can further determine a principle Eigen vector matrix ($W_{DA}'$) based on the Eigen vector matrix W and the Eigen value matrix $\lambda$ to represent he relative importance of a design alternative, based on Expression 9.

Design data configuration module 114 may further determine a relative design alternative rating vector (DRV), for a particular user, by normalizing the principle Eigen vector matrix according to the following exemplary expression:

$$DRV = \begin{bmatrix} drv_1 \\ \vdots \\ drv_n \end{bmatrix} \text{ where } drv_i = 1 - \frac{w'_{DAi}}{\sum_{i=1}^n w'_{DAi}} \text{ and } \sum_{i=1}^n drv_i = 1$$

(Expression 20)

As discussed above, data acquisition module 112 may acquire ranking opinion from a group of users. Design data configuration module 114 may determine, based on the aforementioned expressions, the design alternative rating vector for each user, and then concatenate (e.g., using column concatenation) the relative design alternative rating vectors for each user to form a design alternative rating matrix (DRM) that represent the rating for a design alternative from the users. The design alternative rating matrix can be represented according to the following exemplary expression:

$$DRM = \begin{bmatrix} drm_{11} & \cdots & drm_{1m} \\ \vdots & \ddots & \vdots \\ drm_{n1} & \cdots & drm_{nm} \end{bmatrix} \qquad \text{(Expression 21)}$$

Here, $drm_{ij}$ can represent the criteria rating for $i^{th}$ design alternative, from a $j^{th}$ user. The $drm_{ij}$ are associated with a particular design criterion and/or a particular design sub-criterion.

Design data configuration module 114 may further determine an aggregated design alternative rating (ADAR) vector, wherein each element of the vector may represent an aggregated design alternative rating of a design alternative, from design alternative rating matrix. The aggregated design alternative rating vector can be determined according to the following exemplary expression:

$$ADAR = \begin{bmatrix} adar_1 \\ \vdots \\ adar_n \end{bmatrix} \text{ where } adar_i = \sqrt[m]{\prod_{j=1}^m drm_{ij}} \qquad \text{(Expression 22)}$$

Here, each entry $adar_i$ can be determined based on a geometric mean of the entries of the i-th row of the design alternative rating matrix.

Design data configuration module 114 may further generate a normalized aggregated design alternative rating vector ($ADAR'$), for a set of design alternatives associated with a particular design criterion and/or a particular design sub-criterion, according to the following exemplary expression:

$$ADAR' = \begin{bmatrix} adar_1' \\ \vdots \\ adar_n' \end{bmatrix} \text{ where } adar_i' = \frac{adar_i}{\sum_{i=1}^n adar_i} \qquad \text{(Expression 23)}$$

Referring back to search tree 200 of **FIG. 2,** after design data configuration module 114 determines the normalized aggregated criteria rating vector (ACR) and normalized aggregated sub-criteria rating vector (ASCR), based on a first set of users' opinions about relative importance of each design criteria and/or sub-criteria, and the normalized aggregated design alternative rating vectors (ADAR), based on a second set of users' ranking opinions about the design alternatives, design data configuration module 114 can assign a weigh to paths 210-214 based on these vectors. As discussed above, each entry of a normalized aggregated criteria rating vector may be associated with a particular criterion. Moreover, each entry of a normalized aggregated sub-criteria rating vector may be associated with a particular sub-criterion. Further, each entry of a normalized aggregated design alternative rating vector is also associated with a particular design alternative and with a particular sub-criterion. Based on these associations, the entries of these vectors can be mapped to the paths 210-214 of search tree 200, as follows:

Table 7

| Path connection | Assignment |
|---|---|
| weight ($W_i$) for paths 210 between ($C$, $C_i$) | $acr_i^/$ of $ACR^/$ vector |
| weight ($W_{ij}$) for paths 212 between ($C_i$, $C_{ij}$) | $ascr_{ij}^/$ of $ASCR_i^/$ vector |
| weight ($W_{ijk}$) for the edge ($C_{ij}$, $C_{ijk}$) | $adar_{ijk}^/$ of $ADAR_{ij}^/$ vector |

After updating the weights for search tree 200, design data configuration module 114 can then store data representing the search tree in design alternatives database 130.

Referring back to **FIG. 3,** design selection module 116 can select a design alternative based on the weights included in search tree 200. In some embodiments, design selection module 116 may compute a composite weight ($AW_{ijk}$) for each of the design alternatives listed in search tree 200. Assuming a design goal has been identified (e.g., based on a user input), design selection module 116 can retrieve data representing search tree 200 with a root node 202 associated with the identified design goal. The composite weight can be computed based on the weights along one of paths 210 (associated with a weight $W_i$), one of paths 212 (associated with a weight $W_{ij}$), and one of paths 214 (associated with a weight $W_{ijk}$) that connect between the root node 202 and a design alternative $C_{ijk}$. Design selection module 116 may determine the composite weight based on the following exemplary expression:

$$AW_{ijk} = W_i * W_{ij} * W_{ijk} \qquad \text{(Expression 24)}$$

Design selection module 116 may select the design alternative based on the composite weight. For example, design selection module 116 may select a design alternative that is associated with the highest composite weight. Moreover, design selection module 116 may also select the design alternative based on the composite weight as well as data from constraints database 140. As discussed above, constraints database 140 may store information related to technical constraints (e.g., required display screen size, required computer processor speed, etc.) and non-technical constraints (e.g., cost, time to market, etc.). A constraint can be associated with a design alternative and can be represented with a value $F_{ijk}$, which higher value $F_{ijk}$ indicating a higher degree of constraint.

In some embodiments, design selection module 116 can select, as an optimum solution, a set of design alternatives based on a combination of composite weight and constraint. For example, design selection module 116 may determine an Effectiveness Index (EI) for a design alternative based on the following exemplary expression:

$$EI_{ijk} = \frac{W_i * W_{ij} * W_{ijk}}{F_{ijk}} \qquad \text{(Expression 25)}$$

Design selection module 116 may also determine a Solution Effectiveness Index (SEI) by summing the Effective Index of a design alternative picked from each set of design alternatives associated with the design sub-criteria, based on the following exemplary expression:

$$SEI = \sum (EI_{ijk}) \quad \forall i,j \qquad \text{(Expression 26)}$$

Design selection module 116 may also determine a Reference Effectiveness Index (REI) by determining a maximum $EI_{ijk}$ value for each set of design alternatives associated with the design sub-criteria, based on the following exemplary expression:

$$REI = \sum \max(EI_{ijk}) \; \forall \, i, j \qquad \text{(Expression 27)}$$

The set of design alternatives associated with the maximum $EI_{ijk}$ for each design sub-criterion is also designated as the reference solution set.

Design selection module 116 may also determine a Solution Effectiveness Coefficient (ECO) based on a ratio between SEI and REI, according to the following exemplary expression:

$$ECO = \frac{SEI}{REI} \qquad \text{(Expression 28)}$$

Design selection module 116 may select a set of design alternatives from each set of design alternatives associated with the design sub-criteria to form the optimum solution, such that Solution Effectiveness Index associated with the set of design alternatives (based on summation of Effectiveness Indices) reaches the maximum, while at the same time the Solution Effectiveness Coefficient (determined based on the Solution Effective Index) remains above a predetermined tolerance threshold T, and that the sum of the constraint values $F_{ijk}$ associated with each of the set of design alternatives remains below a predetermined constraint threshold L. If the sum of the constraint values $F_{ijk}$ is above the predetermined constraint threshold L, design selection module 116 may have to select a different set of design alternatives.

For example, if design selection module 116 determines that the sum of the constraint values $F_{ijk}$ is below the predetermined constraint, design selection module 116 can provide the reference solution set as output, which can then be transmitted to product configuration system 170 for product generation/configuration. On the other hand, if the sum of the constraint values $F_{ijk}$ is determined to be above the predetermined constraint, design selection module 116 can select a second set of design alternatives which provide the next best Solution Effectiveness Index with reduced sum of constraint values $F_{ijk}$. If Solution Effectiveness Coefficient (SEI/REI) is determined to remain below tolerance threshold T, design selection module 116 may provide the second set of design alternatives as output to product configuration system 170 for product generation/configuration.

Moreover, in a case where an optimum solution cannot be found (e.g., after a few iterations, the sum of constraint values $F_{ijk}$ remains above the predetermined constraint, the predetermined constraint can also be increased. This can represent a policy where a budget (represented by the constraint values) is increased for high value features. Such features may include features that tend to provide huge improvement in user experience and hence regarded as in high "value for money" zone.

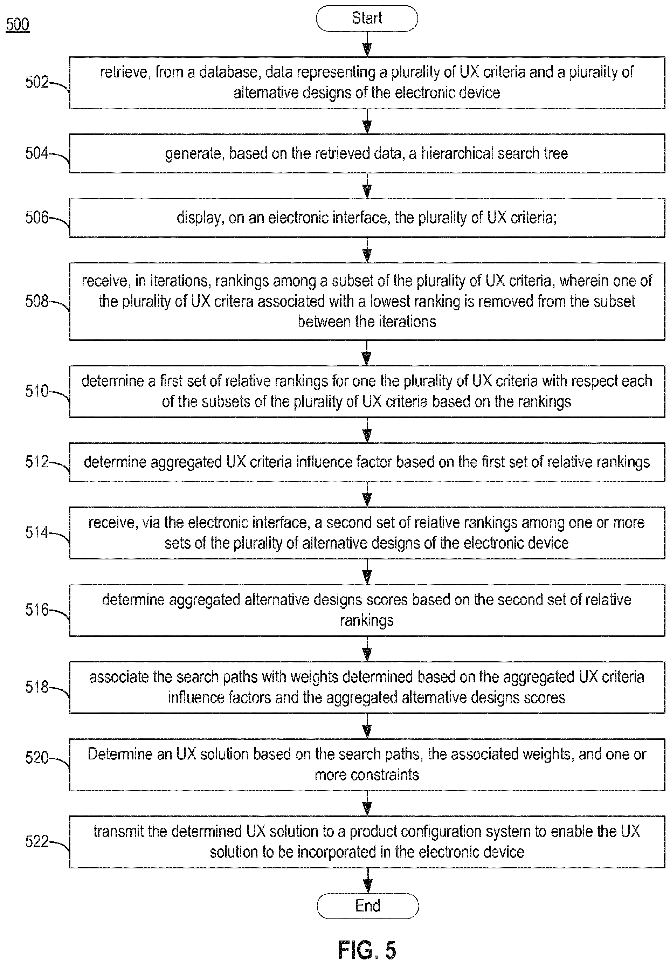

**FIG. 5** depicts an example method 500 for improving user experience design of an electronic device. Method 500 may be implemented as one or more computer programs for a user experience system (e.g., user experience system 110) executed by one or more processors. Moreover, in some embodiments, at least part of method 500 may be implemented by an enterprise application hosted on a server having one or more processors executing one or more computer programs of the enterprise application stored on a non-transitory computer readable medium.

After an initial start, the system retrieve, from one or more databases (e.g., user data database 120 and design alternatives database 130), data representing a plurality of user experience (UX) design criteria and a plurality of alternative designs of the electronic device, in step 502. The system can then generate, based on the retrieved data, a hierarchical search tree (e.g., search tree 200 of FIG. 2) comprising a root, a first set of nodes representing the plurality of UX criteria, and a second set of nodes representing the plurality of alternative designs, in step 504. The search tree may include a plurality of search paths that link among the root and the first and second sets of nodes.

The system may also display, on an electronic interface (e.g., web service interface 400), the plurality of UX criteria, in step 506. The system can then receive, in iterations, rankings among a subset of the plurality of UX criteria, wherein one of the plurality of UX criteria associated with a lowest ranking is removed from the subset between the iterations, in step 508. The system can determine a first set of relative rankings for one the plurality of UX criteria with respect each of the subsets of the plurality of UX criteria based on the rankings, in step 510. The system can also determine aggregated UX criteria influence factor based on the first set of relative rankings, in step 512. In some embodiments, the determination of the first set of relative rankings and aggregated UX criteria influence factors based on, for example, Expressions 1-13.

The system may also receive, via an electronic interface (e.g., web service interfaces 450 and 452), a second set of relative rankings among one or more sets of the plurality of alternative designs of the electronic device, in step 514. The system may also determine aggregated alternative designs scores based on the second set of relative rankings, in step 516. In some embodiments, the determination of the second set of relative rankings and aggregated designs scores based on, for example, expressions 14-23.

The system may also associate the search paths with weights determined based on the aggregated UX criteria influence factors and the aggregated alternative designs scores, in step 518. In some embodiments, the assignment of the weights can be based on, for example, Table 7.

After configuring the search paths with the weights, the system may determine an UX solution based on the search paths, the associated weights, as well as a set of constraints, in step 520. In some embodiments, the determination can be based on Expressions 24 and 25, and may include take into consideration various technical and non-technical constraints. The system can then transmit the determined UX solution to a product configuration system to enable the UX solution to be incorporated in the electronic device, in step 522.

Computer System

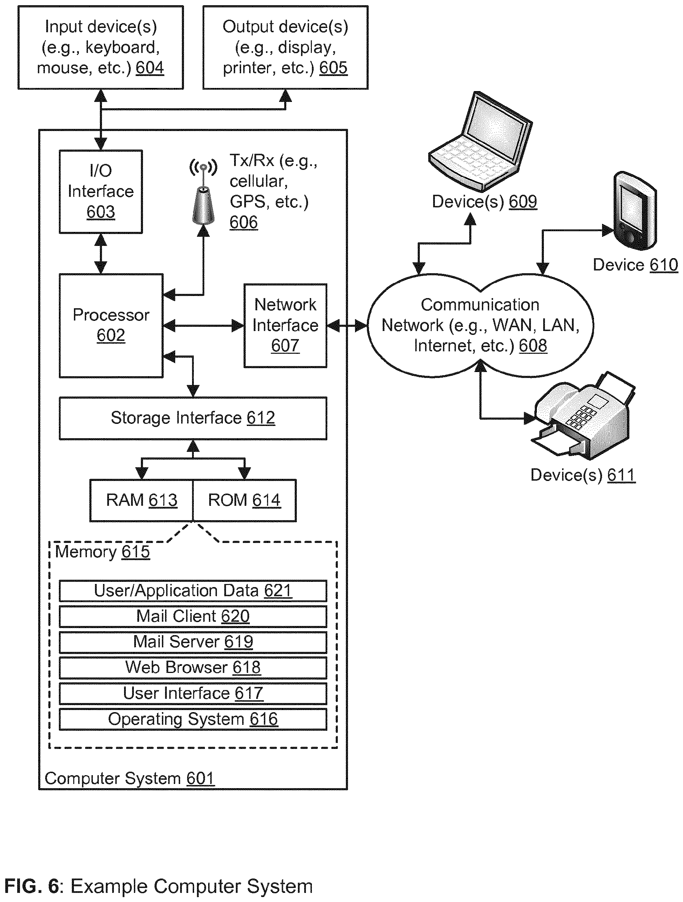

**FIG. 6** is a block diagram of an exemplary computer system for implementing embodiments consistent with the present disclosure. Variations of computer system 601 may be used for implementing the devices and systems disclosed herein. Computer system 601 may comprise a central processing unit ("CPU" or "processor") 602. Processor 602 may comprise at least one data processor for executing program components for executing user- or system-generated requests. A user may include a person, a person using a device such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 602 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 602 may be disposed in communication with one or more input/output (I/O) devices via I/O interface 603. The I/O interface 603 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.11 a/b/g/n/x, Bluetooth, cellular (e.g., code-division multiple access (CDMA), highspeed packet access (HSPA+), global system for mobile communications (GSM), long-term evolution (LTE), WiMax, or the like), etc.

Using the I/O interface 603, the computer system 601 may communicate with one or more I/O devices. For example, the input device 604 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 605 may be a printer, fax machine, video display (e.g., cathode ray tube (CRT), liquid crystal display (LCD), light-emitting diode (LED), plasma, or the like), audio speaker, etc. In some embodiments, a transceiver 606 may be disposed in connection with the processor 602. The transceiver may facilitate various types of wireless transmission or reception. For example, the transceiver may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 602 may be disposed in communication with a communication network 608 via a network interface 607. The network interface 607 may communicate with the communication network 608. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 608 may include, without limitation, a direct interconnection, local area network (LAN), wide area network (WAN), wireless network (e.g., using Wireless Application Protocol), the Internet, etc. Using the network interface 607 and the communication network 608, the computer system 601 may communicate with devices 610, 611, and 612. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 601 may itself embody one or more of these devices.

In some embodiments, the processor 602 may be disposed in communication with one or more memory devices (e.g., RAM 613, ROM 614, etc.) via a storage interface 612. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc. Variations of memory devices may be used for implementing, for example, the databases disclosed herein.

The memory devices may store a collection of program or database components, including, without limitation, an operating system 616, user interface application 617, web browser 618, mail server 619, mail client 620, user/application data 621 (e.g., any data variables or data records discussed in this disclosure), etc. The operating system 616 may facilitate resource management and operation of the computer system 601. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 617 may facilitate display, execution, interaction, manipulation, or operation of program components through textual or graphical facilities. For example, user interfaces may provide computer interaction interface elements on a display system operatively connected to the computer system 601, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 601 may implement a web browser 618 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 601 may implement a mail server 619 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 601 may implement a mail client 620 stored program component. The mail client may be a mail viewing application, such as Apple Mail, Microsoft Entourage, Microsoft Outlook, Mozilla Thunderbird, etc.

In some embodiments, computer system 601 may store user/application data 621, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, structures, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of any computer or database component may be combined, consolidated, or distributed in any working combination.

The specification has described for improving user experience of an electronic device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A method of improving user experience design (UX) of an electronic device, the method being performed by a hardware processor and comprising:

retrieving, from a database, data representing a plurality of UX criteria and a plurality of alternative designs of the electronic device;

generating, based on the retrieved data, a hierarchical search tree comprising a root, a first set of nodes representing the plurality of UX criteria, a second set of nodes representing the plurality of alternative designs, and a plurality of search paths that link among the root and the first and second sets of nodes;

displaying, on an electronic interface, the plurality of UX criteria;

receiving, in iterations, rankings among a subset of the plurality of UX criteria, wherein one of the plurality of UX criteria associated with a lowest ranking is removed from the subset between the iterations;

determining a first set of relative rankings for one the plurality of UX criteria with respect each of the subsets of the plurality of UX criteria based on the rankings;

determining aggregated UX criteria influence factor based on the first set of relative rankings;

receiving, via the electronic interface, a second set of relative rankings among one or more sets of the plurality of alternative designs of the electronic device;

determining aggregated alternative designs scores based on the second set of relative rankings;

associating the search paths between the root and the plurality of UX criteria with a first set of weights determined based on the aggregated UX criteria influence factors;

associating the search paths between the plurality of UX criteria and the plurality of alternative designs of the electronic device with a second set of weights determined based on the aggregated alternative designs scores;

determining, based on the search paths and the associated first and second set of weights, an UX solution; and

transmitting the determined UX solution to a product configuration system to enable the UX solution to be incorporated in the electronic device.

2. The method of claim 1, wherein determining aggregated UX criteria influence factor based on the first set of relative rankings comprises:

determining a set of reciprocal matrices based on the first set of relative rankings; wherein each of the set of reciprocal matrices is associated with a user of the plurality of users;

determining a set of relative criteria influence vectors for each of the set of reciprocal matrices;

determining a criteria rating matrix associated with the plurality of users by combining the sets of relative criteria influence vectors; and

determining the aggregated UX criteria influence factors based on the criteria rating matrix.

3. The method of claim 2, wherein the set of criteria influence vectors and the criteria rating matrix are also determined based on normalization.

4. The method of claim 1, 2 and 3, wherein determining aggregated alternative designs scores based on the second set of relative rankings comprises:

determining a set of reciprocal matrices based on the second set of relative rankings;

determining a set of relative rating vectors for each of the set of reciprocal matrices;

determining an alternative design rating matrix by combining the sets of relative rating vectors; and

determining the aggregated alternative designs scores based on the alternative design rating matrix.

5. The method of claim 4, wherein the set of relative rating vectors and the alternative design rating matrix are also determined based on normalization.

6. The method of any preceding claim, further comprising:

receiving, from the electronic interface, one or more design constraints associated with one or more properties;

wherein the UX solution is also determined based on the one or more design constraints.

7. The method of claim 6, wherein determining of the UX solution further comprises:

determining a first alternative design from the plurality of alternative designs based on the search paths and the associated first and second set of weights;

responsive to determining that the first alternative design does not satisfy the one or more design constraints:

determining a second alternative design from the plurality of alternative designs based on the search paths and the associated first and second set of weights;

determining a reduction of a property of the one or more properties between the first and second alternative designs; and

providing the second alternative design as the UX solution based on the determined reduction.

8. A system for improving user experience design (UX) of an electronic device, the system comprising:

a memory that stores a set of instructions; and

a hardware processor configured to execute the set of instructions for performing the method of any preceding claim.

9. A non-transitory computer-readable medium storing computer-executable instructions to implement a method for improving user experience design (UX) of an electronic device, the method of any of claims 1-7.

150a

150b

150c

150d

Network 160

100

UX design system 110

Product configuration system 170

User data database 120

Design alternatives database 130

Constraints database 140

FIG. 1

EP 3 352 091 A1

FIG. 2

110

Data acquisition module 112

Design data configuration module 114

Design selection module 116

FIG. 3

400

| Rank these criteria for design of an education computer |
| --- |

| Usability | Learnability | Service | Personalization |
| --- | --- | --- | --- |
| Rank | Rank | Rank | Rank |

FIG. 4A

EP 3 352 091 A1

| | Usability | Learnability | Service | Personalization |
|---|---|---|---|---|
| **Round 1** | Round 1: 3 | Round 1: 1 | Round 1: 5 | Round 1: 7 |

| | Usability | | Service | Personalization |
|---|---|---|---|---|
| **Round 2** | Round 1: 3<br>Round 2: 5 | | Round 1: 5<br>Round 2: 3 | Round 1: 7<br>Round 2: 7 |

| | Usability | Personalization |
|---|---|---|
| **Round 3** | Round 1: 3<br>Round 2: 5<br>Round 3: 3 | Round 1: 7<br>Round 2: 7<br>Round 3: 7 |

| | Personalization |
|---|---|
| **Round 4** | Round 1: 7<br>Round 2: 7<br>Round 3: 7<br>Round 4: 9 |

**FIG. 4B**

450

| 1. Rank following Design alternatives with respect to accessibility | rank |
| --- | --- |
|    a. Design Alternative 1 | 1 |
|    b. Design Alternative 2 | 2 |
|    c. Design Alternative 3 | 3 |

452

2. Please provide comparative input on design alternatives with respect to accessibility

FIG. 4C

500

( Start )

502 — retrieve, from a database, data representing a plurality of UX criteria and a plurality of alternative designs of the electronic device

504 — generate, based on the retrieved data, a hierarchical search tree

506 — display, on an electronic interface, the plurality of UX criteria;

508 — receive, in iterations, rankings among a subset of the plurality of UX criteria, wherein one of the plurality of UX critera associated with a lowest ranking is removed from the subset between the iterations

510 — determine a first set of relative rankings for one the plurality of UX criteria with respect each of the subsets of the plurality of UX criteria based on the rankings

512 — determine aggregated UX criteria influence factor based on the first set of relative rankings

514 — receive, via the electronic interface, a second set of relative rankings among one or more sets of the plurality of alternative designs of the electronic device

516 — determine aggregated alternative designs scores based on the second set of relative rankings

518 — associate the search paths with weights determined based on the aggregated UX criteria influence factors and the aggregated alternative designs scores

520 — Determine an UX solution based on the search paths, the associated weights, and one or more constraints

522 — transmit the determined UX solution to a product configuration system to enable the UX solution to be incorporated in the electronic device

( End )

**FIG. 5**

**FIG. 6**: Example Computer System

Europäisches
Patentamt

European
Patent Office

Office européen
des brevets

# EUROPEAN SEARCH REPORT

Application Number

EP 17 16 3908

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Hang Guo: "When Change Is Constant: A Spiral UX Design Model :: UXmatters", , 6 April 2015 (2015-04-06), XP055414433, Retrieved from the Internet: URL:https://www.uxmatters.com/mt/archives/2015/04/when-change-is-constant-a-spiral-ux-design-model.php [retrieved on 2017-10-11] * page 6 - page 16 * ----- | 1-9 | INV. G06F17/16 G06F3/00 G06Q10/06 |
| X | US 2013/159228 A1 (MEIJER HENRICUS JOHANNES MARIA [US] ET AL) 20 June 2013 (2013-06-20) * paragraph [0045] - paragraph [0067] * ----- | 1-9 | |

TECHNICAL FIELDS
SEARCHED      (IPC)

G06F
G06Q

The present search report has been drawn up for all claims

| Place of search | Date of completion of the search | Examiner |
|---|---|---|
| Berlin | 11 October 2017 | Virnik, Elena |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 16 3908

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2017

| Patent document cited in search report | Publication date | Patent family member(s) | Publication date |
|---|---|---|---|
| US 2013159228 A1 | 20-06-2013 | NONE | |

For more details about this annex : see Official Journal of the European Patent Office, No. 12/82